# EUROPÄISCHE PATENTSCHRIFT

(11) **EP 0 666 957 B1**
(45) Veröffentlichungstag und Bekanntmachung des Hinweises auf die Patenterteilung: **30.06.1999**
(21) Anmeldenummer: 93921803.8
(22) Anmeldetag: 08.10.1993
(51) Int. Cl.: E05F 15/16, H02H 7/085, B60J 7/057, B60R 1/06, H01Q 1/10

(54) **ELEKTROMOTORISCHER ANTRIEB**
ELECTROMOTIVE DRIVE
ENTRAINEMENT ELECTROMOTEUR

(30) Priorität: 21.10.1992 DE 4235472; 12.03.1993 DE 4307866
(43) Veröffentlichungstag der Anmeldung: 16.08.1995
(73) Patentinhaber: ROBERT BOSCH GMBH, 70442 Stuttgart (DE)
(72) Erfinder: PETER, Cornelius, D-77815 Buehl-Neusatz (DE); SEILER, Hartmut, D-76532 Baden-Baden (DE); AAB, Volker, D-77880 Obersasbach (DE); HADERER, Guenter, D-77815 Buehl (DE)
(86) Internationale Anmeldenummer: DE9300952
(87) Internationale Veröffentlichungsnummer: WO9409240

(56) Entgegenhaltungen:
- EP-A- 0 026 719
- EP-A- 0 310 279
- EP-A- 0 393 233
- DE-A- 3 411 001

## Beschreibung

### Stand der Technik

Die Erfindung geht aus von einem elektromotorischen Antrieb nach der Gattung des unabhängigen Anspruchs. Aus der DE-U 90 12 217.8 ist eine Anordnung bekannt, die einen elektromotorischen Antrieb zum Öffnen und Schließen von Fenstern eines Kraftfahrzeugs enthält. Ein zentrales Gerät, das Steuer- und Auswerteanordnungen aufweist, ist mit mehreren Antriebseinheiten verbunden, die in den Türen des Kraftfahrzeugs angeordnet sind. Die Antriebseinheiten enthalten einen Elektromotor sowie eine Sensoranordnung. Die Sensoranordnung erfaßt eine Drehzahl des Antriebs. Zwischen dem zentralen Gerät und jeder Antriebseinheit sind fünf Verbindungsleitungen zur Signalübertragung und Energieübertragung vorgesehen.

Aus der DE 34 11 001 A1 ist eine Schaltungsanordnung beispielsweise für Fensterheber oder für Sitzverstellungen in Kraftfahrzeugen bekannt, bei denen die Stromversorgung einer dem Elektromotor zugeordneten Sensoranordnung über die zum Elektromotor geführten beiden Stromversorgungsleitungen vorgenommen ist. Neben den zwei zum Elektromotor führenden Stromversorgungsleitungen sind eine dritte, jeweils zu den Sensoranordnungen führende weitere Stromversorgungsleitung sowie eine jeweils von den Sensoranordnungen zu einem Mikroprozessor führende Signalleitung erforderlich. Der vorbekannte elektromotorische Antrieb benötigt daher für jede Baugruppe, die in der vorliegenden Anmeldung als zweites Teil bezeichnet ist, vier Verbindungsleitungen. Nachteilig ist weiterhin, daß bei einem vorgegebenen Kurzschluß des Elektromotors, den die Steueranordnung beispielsweise zum raschen Abbremsen des Elektromotors auslösen kann, die Energieversorgung der Sensoranordnung nicht sichergestellt ist.

Der Erfindung liegt die Aufgabe zugrunde, den Verkabelungsaufwand bei einem elektromotorischen Antrieb mit einem ersten Teil, das eine Steuer- und eine Auswerteanordnung enthält, und mit einem vom ersten Teil abgesetzten zweiten Teil, das einen Elektromotor- und eine Sensoranordnung enthält, zu vereinfachen.

Die Aufgabe wird durch die in den unabhängigen Ansprüchen angegebenen Merkmale jeweils gelöst.

### Vorteile der Erfindung

Der erfindungsgemäße elektromotorische Antrieb weist den Vorteil auf, daß zwischen dem ersten und dem zweiten Teil nur drei Verbindungsleitungen erforderlich sind. Zwei dieser Leitungen verbinden die im ersten Teil enthaltene Steueranordnung mit dem im zweiten Teil enthaltenen Elektromotor. Eine dritte Leitung verbindet die im ersten Teil enthaltene Auswerteanordnung mit der im zweiten Teil enthaltenen Sensoranordnung.

Dabei ist die Energieversorgung der Sensoranordnung über die dritte Leitung sowie über wenigstens eine der zum Elektromotor führenden Leitungen vorgesehen. Eine Signalübertragung findet auf der dritten Leitung statt. Die Sensoranordnung ergibt den über die dritte Leitung fließenden Strom in Abhängigkeit von einem Sensorsignal vor. Der über die dritte Leitung fließende Strom setzt sich daher zusammen aus dem Strom für die Energieversorgung der Sensoranordnung und aus dem für die Signalübertragung vorgegebenen Strom.

Der Vorteil liegt darin, daß bei einem vorgegebenen Kurzschluß des Elektromotors, den die Steueranordnung zum raschen Abbremsen des Elektromotors auslösen kann, die Energieversorgung der Sensoranordnung über die zum Motor führenden Leitungen ohne weitere Maßnahmen sicherstellbar ist. Ein gegebenenfalls vorgesehener Energiespeicher, der der Sensoranordnung zugeordnet ist, kann deshalb gering bemessen sein oder vollständig entfallen.

Vorteilhafte Weiterbildungen und Verbesserungen des erfindungsgemäßen elektromotorischen Antriebs ergeben sich aus Unteransprüchen.

In einer vorteilhaften Weiterbildung ist vorgesehen, daß die Sensoranordnung über zwei Gleichrichterdioden mit den beiden zum Elektromotor führenden Leitungen verbunden ist. Mit dieser Maßnahme ist es möglich, das benötigte Potential der Energieversorgung sowohl über die eine als auch über die andere zum Motor führende Leitung zu führen. Die Drehrichtung des Elektromotors kann somit umgeschaltet werden.

In einer anderen vorteilhaften Weiterbildung ist eine Schaltung zur Erhöhung der Spannung in der Auswerteanordnung vorgesehen. Die Schaltung erhöht die Spannung gegenüber der Betriebsspannung des Elektromotors. Mit dieser Maßnahme ist es möglich, den Elektromotor durch Verbinden der beiden Leitungen sowohl mit Masse als auch mit Betriebsspannungspotential kurzzuschließen. Die Schaltung zur Erhöhung der Spannung stellt in jedem Betriebszustand das erforderliche hohe Potential zur Energieversorgung der Sensoranordnung über die dritte Leitung sicher.

In einer vorteilhaften Ausgestaltung ist vorgesehen, daß die Auswerteanordnung eine Stromspiegelschaltung enthält. Die Stromspiegelschaltung setzt den über die dritte Leitung fließenden Strom in eine entsprechende Spannung um, die in der folgenden Schaltung einfach auszuwerten ist.

Gemäß einer zweiten Ausführung des erfindungsgemäßen elektromotorischen Antriebs ist die Energieversorgung der Sensoranordnung über die beiden zum Elektromotor führenden Leitungen vorgesehen. Bei dieser Ausführung ist es möglich, entweder den über die dritte Leitung fließenden Strom oder die an der dritten Leitung liegende Spannung in Abhängigkeit vom Sensorsignal vorzugeben.

In einer vorteilhaften Weiterbildung der zweiten Ausführung des erfindungsgemäßen elektromotorischen Antriebs ist vorgesehen, daß die Sensoranordnung über jeweils zwei Gleichrichterdioden mit den beiden zum Elektromotor führenden Leitungen verbunden ist. Mit dieser Maßnahme ist es möglich, die Drehrichtung wahlfrei vorgeben zu können.

Weitere vorteilhafte Ausgestaltungen für die erste und die zweite Auführung des erfindungsgemäßen elektromotorischen Antriebs ergeben sich aus weiteren Unteransprüchen.

In einer vorteilhaften Ausgestaltung ist vorgesehen, daß die Sensoranordnung wenigstens eine gesteuerte Stromquelle enthält. Die Stromquelle prägt den über die dritte Leitung fließenden Strom in Abhängigkeit vom Sensorsignal auf einen fest vorgegebenen Wert ein. Der Einsatz von mehreren Stromquellen ermöglicht die Vorgabe von unterschiedlichen Strompegeln.

Die zur Auswerteanordnung übertragenen Strom- oder Spannungssignale sind vorzugsweise auf zwei unterschiedliche diskrete Signalpegel festgelegt. Mit dieser Maßnahme ist eine hohe Festigkeit gegenüber Störsignalen erreichbar. Diese Signalübertragung ist insbesondere für eine digitale Weiterverarbeitung des Signals vorteilhaft.

Der Einsatz einer Differenzieranordnung in Verbindung mit einem Impulslängendiskriminator ermöglicht bei Signalübertragungen mit einem stufenförmigen Signalverlauf eine hohe Festigkeit gegenüber Störsignalen. Störsignale, die beim Abschalten des Elektromotors auftreten sowie von externen Vorrichtungen eingekoppelte Störungen werden wirkungsvoll unterdrückt.

Zur Signalübertragung ist weiterhin eine vorab festgelegte Impulsfolge besonders geeignet. Die Signalübertragung entspricht somit der einer einfachen seriellen Eindrahtschnittstelle. Die Impulsfolge ermöglicht die Codierung von unterschiedlichsten Sensorsignalen, die mit dem digitalen Verfahren zuverlässig zur Auswerteanordnung übertragen werden.

In einer vorteilhaften Ausgestaltung des erfindungsgemäßen elektromotorischen Antriebs ist vorgesehen, daß die Sensoranordnung wenigstens einen Sensor zum Erfassen der Lage eines vom Elektromotor angetriebenen Teils enthält. Besonders geeignet ist wenigstens ein Hallsensor, der mit einem vom Elektromotor angetriebenen Permanentmagneten zusammenwirkt.

Der erfindungsgemäße elektromotorische Antrieb ist insbesondere geeignet als Verstellantrieb in Kraftfahrzeugen. Die geringe Anzahl von Verbindungsleitungen zwischen dem ersten Teil und wenigstens einem zweiten Teil bringt Kosteneinsparungen in der Serienproduktion und erhöht die Übersichtlichkeit.

Der erfindungsgemäße elektromotorische Antrieb wird anhand der Zeichnung in der folgenden Beschreibung näher erläutert.

### Zeichnung

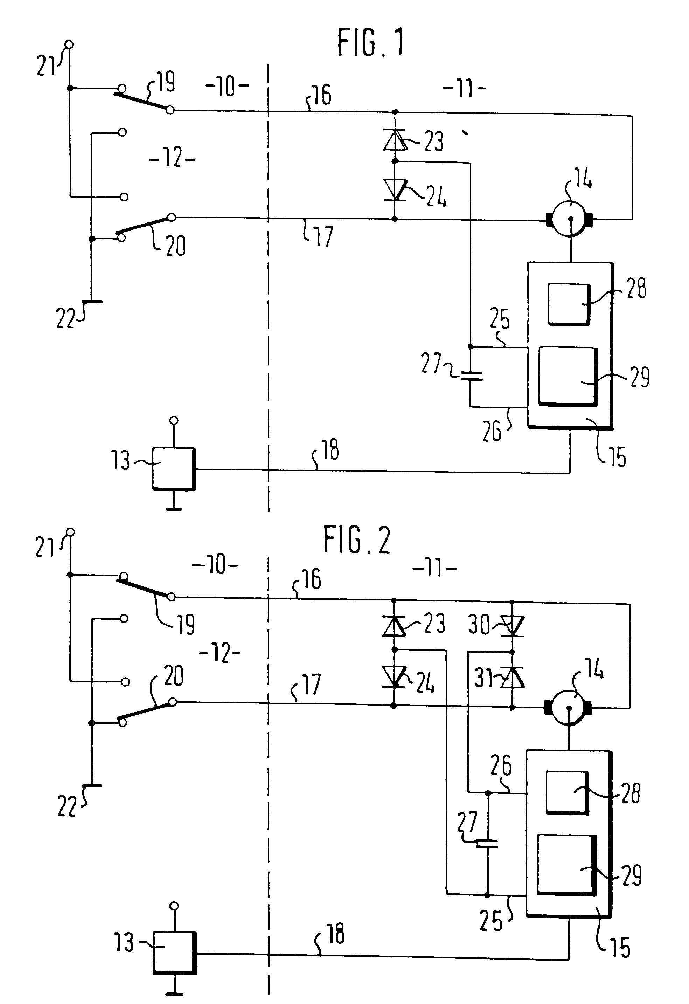

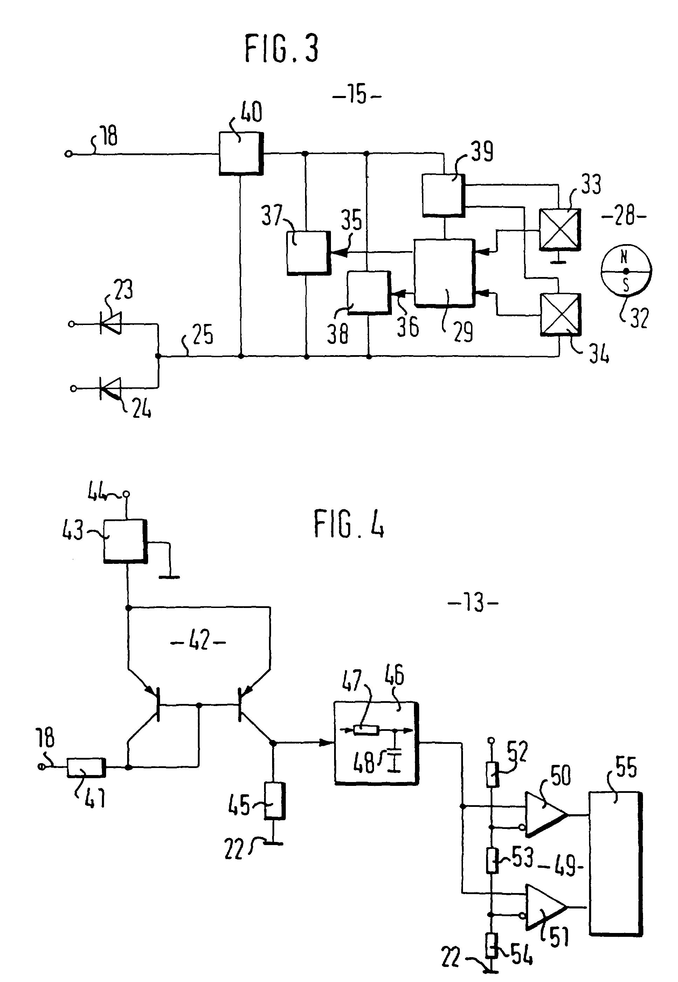

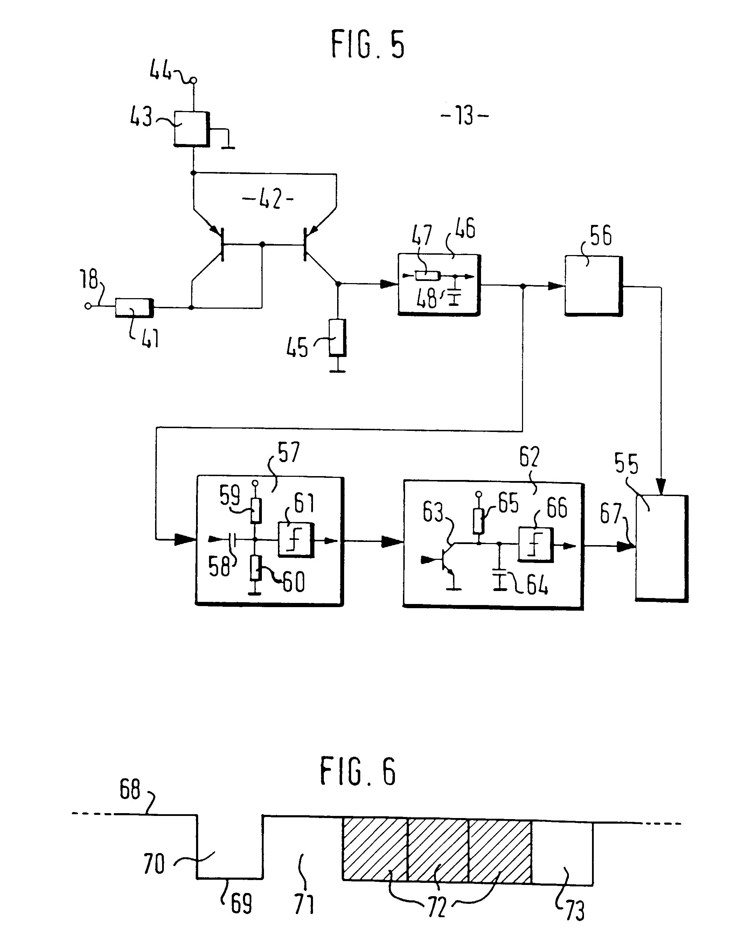

Figuren 1 und 2 zeigen Ausführungsbeispiele eines erfindungsgemäßen elektromotorischen Antriebs, der ein erstes Teil mit einer Steuer- und einer Auswerteanordnung und der ein zweites Teil mit einem Elektromotor und einer Sensoranordnung enthält, Figur 3 zeigt ein Ausführungsbeispiel einer Sensoranordnung, Figuren 4 und 5 zeigen Ausführungsbeispiele einer Auswerteanordnung und Figur 6 zeigt ein Ausführungsbeispiel einer Signalübertragung zwischen den beiden Teilen eines erfindungsgemäßen elektromotorischen Antriebs.

Figur 1 zeigt ein erstes Teil 10 und ein vom ersten Teil 10 abgesetztes zweites Teil 11 eines elektromotorischen Antriebs. Die beiden Teile 10, 11 sind strichliniert voneinander getrennt dargestellt. Der erste Teil 10 enthält eine Steueranordnung 12 und eine Auswerteanordnung 13.

Der zweite Teil enthält einen Elektromotor 14 und eine Sensoranordnung 15.

Die Steueranordnung 12 ist mittels zweier Verbindungsleitungen 16, 17 mit dem im zweiten Teil 11 angeordneten Elektromotor 14 verbunden. Eine dritte Leitung 18 verbindet die Auswerteanordnung 13 mit der im zweiten Teil 11 enthaltenen Sensoranordnung 15.

Die Steueranordnung 12 enthält erste und zweite Schaltmittel 19, 20, welche die Verbindungsleitungen 16, 17 jeweils entweder mit einem Betriebsspannungsanschluß 21 oder mit Masse 22 verbinden. Die Verbindungsleitungen 16, 17 sind jeweils mit Gleichrichterdioden 23, 24 verbunden, deren Anoden jeweils an einem ersten Stromversorgungsanschluß 25 der Sensoranordnung 15 liegen. Zwischen dem ersten Stromversorgungsanschluß 25 und einem zweiten Stromversorgungsanschluß 26 der Sensoranordnung 15 ist ein Kondensator 27 geschaltet. Die Sensoranordnung 15 enthält einen Sensor 28, der in Wirkverbindung mit dem Elektromotor 14 steht. Weiterhin ist in der Sensoranordnung 15 eine signalverarbeitende Anordnung 29 vorgesehen.

Bei dem in Figur 2 gezeigten Blockschaltbild des die beiden Teile 10, 11 enthaltenden elektromotorischen Antriebs sind diejenigen Teile, die mit den in Figur 1 gezeigten Teilen übereinstimmen, jeweils mit denselben Bezugszeichen versehen. Der zweite Stromversorungsanschluß 26 der Sensoranordnung 15 ist über weitere Gleichrichterdioden 30, 31 mit den Verbindungsleitungen 16, 17 verbunden. Der zweite Stromversorgungsanschluß 26 ist jeweils an die Katodenanschlüsse der Dioden 30, 31 geschaltet.

Figur 3 zeigt ein Ausführungsbeispiel der in den Figuren 1 und 2 gezeigten Sensoranordnung 15. Der Sensor 28 enthält wenigstens einen vom Elektromotor 14 angetriebenen Permanentmagneten 32, der mit einem ersten und zweiten magnetfeldempfindlichen Element 33, 34 zusammenwirkt. Die magnetfeldempfindlichen Elemente 33, 34 geben Signale an die signalverarbeitende Anordnung 29 ab, die Steuersignale 35, 36 für gesteuerte Stromquellen 37, 38 bereitstellt. Zur Energieversorgung der magnetfeldempfindlichen Elemente 33, 34 und der signalverarbeitenden Anordnung 29 ist eine weitere Stromquelle 39 vorgesehen. Die dritte Leitung 18 führt zu einem Spannungsregler 40, dessen Ausgang mit den Stromquellen 37, 38 sowie mit der weiteren Stromquelle 39 verbunden ist. Der Spannungsregler 40 ist weiterhin mit dem ersten Stromversorgungsanschluß 25 verbunden, der zu den Anoden-Anschlüssen der Gleichrichterdioden 23, 24 führt. Die Dioden 23, 24 sind in Figur 3 nochmals eingetragen, um zu verdeutlichen, daß die in Figur 3 gezeigten Elemente 33, 34 einschließlich der Dioden 23, 24; 30, 31 bis auf den Permanentmagneten 32 innerhalb einer integrierten Schaltung untergebracht sein können.

Figur 4 zeigt ein Ausführungsbeispiel der Auswerteanordnung 13. Die dritte Leitung 18 führt über einen Widerstand 41 zu einer Stromspiegelschaltung 42. Als Energiequelle ist eine Spannungswandlerschaltung 43 vorgesehen, welche die an einem Stromversorgungsanschluß 44 liegende Spannung auf ein höheres Potential hochtransformiert. An einem ausgangsseitigen Arbeitswiderstand 45 tritt eine Spannung auf, die dem über die dritte Leitung 18 fließenden Strom entspricht. Das am Arbeitswiderstand 45 auftretende Spannungssignal wird über eine Tiefpaßanordnung 46, die eine Widerstands-Kondensator-Kombination 47, 48 enthält, auf eine Komparatoranordnung 49 gegeben. Die Komparatoranordnung 49 enthält zwei Differenzverstärker 50, 51 deren invertierender Eingang jeweils an eine drei Widerstände 52, 53, 54 enthaltenden Widerstandsteilerkette angeschlossen sind. Die nicht invertiertenden Eingänge der Differenzverstärker 50, 51 sind mit dem Tiefpaß 46 verbunden. Die Differenzverstärker 50, 51 geben Ausgangssignale an einen Mikroprozessor 55 ab.

Figur 5 zeigt eine andere Ausführung der Auswerteanordnung 13. Diejenigen in Figur 5 gezeiten Teile, die mit den in Figur 4 gezeigten Teilen übereinstimmen, tragen jeweils dieselben Bezugszeichen. In Figur 5 ist anstelle der in Figur 4 gezeigten Komparatoranordnung 49 ein Analog/Digital-Wandler 56 vorgesehen, der ein Ausgangssignal an den Mikroprozessor 50 abgibt. Das am Ausgang des Tiefpaßes 46 auftretende Signal, das dem Analog/Digital-Wandler 56 zugeführt ist, wird weiterhin einer Differenzieranordnung 57 zugeleitet. Die Differenzieranordnung 57 enthält einen Kondensator 58, einen zwei Widerstände 59, 60 aufweisenden Spannungsteiler sowie einen Schwellwertschalter 61.

Das Ausgangssignal der Differenzieranordnung 57 gelangt an einen Impulslängendiskriminator 62. Der Impulslängendiskriminator 62 enthält einen Schalttransistor 63, dessen Kollektor-Emmitter-Strecke einem Kondensator 64 parallel schaltbar ist. Der Kondensator 64 ist über einen Widerstand 65 aufladbar. Das am Kondensator 64 auftretende Signal wird einem weiteren Schwellwertschalter 66 zugeleitet, der ein Ausgangssignal an einen Interrupteingang 67 des Mikroprozessors 55 abgibt.

Figur 6 zeigt eine Impulsfolge, die, ausgehend von einem Ruhepegel 68 einen zweiten diskreten Pegel 69 annehmen kann. Die Impulsfolge enthält ein Startbit 70, ein Trennbit 71, Informationsbits 72, sowie ein Stoppbit 73.

Zunächst wird die Funktion des erfindungsgemäßen elektromotorischen Antriebs anhand der in den Figuren 1 und 2 gezeigten Blockschaltbilder näher erläutert:

Die im ersten Teil 10 enthaltene Steueranordnung 12 sowie die Auswerteanordnung 13 sind beispielsweise in einem zentralen Gerät untergebracht, an das wenigstens ein zweites Teil 11 angeschlossen ist. Der zweite Teil 11 ist vorzugsweise in einem Gehäuse enthalten, das den Elektromotor 14 und die in unmittelbarer Motornähe 10 installierte Sensoranordnung 15 aufnimmt. Zu jedem angeschlossenen zweiten Teil 11 führen die Verbindungsleitungen 16, 17 sowie die dritte Leitung 18.

Die Steueranordnung 12 hat die Aufgabe, die Betriebsspannung an den Verbindungsleitungen 16, 17 für den Elektromotor 14 derart vorzugeben, daß der Elektromotor 14 in der einen oder in der anderen Drehrichtung betreibbar ist. Die Steueranordnung 12 enthält die beiden Schaltmittel 19, 20, die die Verbindungsleitungen 16, 17 entweder mit dem Betriebsspannungsanschluß 21 oder mit Masse 22 verbinden. Die Schaltmittel 19, 20 können auch derart betätigt werden, daß beide Verbindungsleitungen 16, 17 über die Schaltmittel 19, 20 entweder gleichzeitig an Masse 22 oder gleichzeitig an den Betriebsspannungsanschluß 21 geschaltet werden können. Der Elektromotor 14 ist somit kurzschließbar. Mit dieser Maßnahme ist ein rasches Abbremsen des Elektromotors 14 möglich.

Der Elektromotor 14 im zweiten Teil 11 ist zum Antreiben eines nicht näher gezeigten bewegbaren Teils vorgesehen. Ein solches bewegbares Teil ist beispielsweise Bestandteil eines Verstellantriebs, der vorzugsweise in einem Kraftfahrzeug vorgesehen ist. Das bewegbare Teil ist beispielsweise eine Antenne, ein Faltverdeck, ein Fenster, ein Rückspiegel, ein Teil eines Sitzes und/oder ein Schiebedach.

Beim erfindungsgemäßen elektromotorischen Antrieb ist eine Signalübertragung über die dritte Leitung 18 vom zweiten Teil 11 zum ersten Teil 10 vorgesehen. Übertragen wird beispielsweise ein drehzahlabhängiges Signal, ein Lagesignal, ein Drehrichtungssignal und/oder beispielsweise ein Temperatursignal. Das übertragene Signal wird im ersten Teil 10 in der Auswerteanordnung 13 detektiert. In Abhängigkeit vom detektierten Signal erfolgt beispielsweise die Ansteuerung des Elektromotors 14 in der einen oder in der anderen Richtung. Beispielsweise kann mit einem Drehzahl- und/oder Lagesignal auch ein Einklemmschutz realisiert werden, der das Einklemmen von Gegenständen oder von Körperteilen zwischen dem bewegbaren Teil und einem anderen, ebenfalls nicht gezeigten festen Teil verhindert.

Die in der Sensoranordnung 15 enthaltene signalverarbeitende Anordnung 29 benötigt im allgemeinen eine Energieversorgung. Auch der Sensor 28 benötigt häufig bereits selbst eine Energieversorgung. Optoelektronische Geber benötigen eine Energie für eine gegebenenfalls vorgesehene Strahlungsquelle. Magnetfeldempfindliche Sensoren können ebenfalls einen Energiebedarf aufweisen. Bei einem auf dem Halleffekt basierenden magnetfeldempfindlichen Sensor muß ein Strom bereitgestellt werden. Magnetoresistive Elemente müssen ebenfalls von einem Strom durchflossen werden, damit ein Sensorsignal erhalten werden kann.

Gemäß der ersten Ausführung der Erfindung ist die Energieversorgung der Sensoranordnung 15 über die dritte Leitung 18 sowie über wenigstens eine der beiden Verbindungsleitungen 16, 17 vorgesehen. Der erste Stromversorgungsanschluß 25 der Sensoranordnung 15 ist über die als Gleichrichter wirkenden Dioden 23, 24 mit den zu dem Elektromotor 14 führenden Verbindungsleitungen 16, 17 verbunden. Zunächst ist während des Betriebs des Elektromotors 17 sichergestellt, daß auf einer der beiden Verbindungsleitungen 16, 17 die benötigte Polarität auftritt. Im gezeigten Ausführungsbeispiel ist dies das negative Potential. Aber auch in Stillstandszeiten des Elektromotors 14 ist die Energieversorgung sichergestellt, weil die Schaltmittel 19, 20 zumindest eine der beiden Leitungen 16, 17 mit Masse 22 verbinden, wobei die Masse 22 dem negativen Potential entspricht. Im Falle des Kurzschließens des Elektromotors 14 gegen Masse 22 führen beide Leitungen 16, 17 negatives Potential. Das positive Potential wird der Sensoranordnung 15 über die dritte Leitung 18 zugeleitet. Die Auswerteanordnung 13 verbindet die dritte Leitung 18 über eine in den Figuren 4 und 5 näher erläuterten Schaltung mit einem Stromversorgungsanschluß, der das passende positive Potential aufweist. Gegebenenfalls ist der Kondensator 27 vorgesehen, der eine Energiespeicherung vornehmen kann. Der Kondensator 27 ist zwischen den ersten Stromversorgungsanschluß 25 und den zweiten Stromversorgungsanschluß 26 der Sensoranordnung 15 geschaltet. Der zweite Stromversorgungsanschluß 26 kann beispielsweise intern unmittelbar mit der dritten Leitung 18 verbunden sein. Die Energiespeicherung im Kondensator 27 für eine kurze Zeit kann in dem Betriebszustand erforderlich sein, der dann gegeben ist, wenn die beiden Schaltmittel 19, 20 zum Abbremsen des Elektromotors 14 die beiden Verbindungsleitungen 16, 17 gleichzeitig mit dem Betriebsspannungsanschluß 21 verbinden, der positives Potential führt. Der Kondensator 27 muß in diesem Fall für die Sensoranordnung 15 noch so lange Energie bereitstellen, bis der Elektromotor 14 abgebremst ist. Mit anderen Maßnahmen, die anhand der in den Figuren 4 und 5 gezeigten Schaltbilder näher erläutert sind, kann der Kondensator 27 auch in diesem Betriebsfall vollständig entfallen.

Der Unterschied zwischen den in Figur 1 und Figur 2 gezeigten Ausführungsformen des erfindungsgemäßen elektromotorischen Antriebs liegt im wesentlichen darin, daß bei der in Figur 2 gezeigten Ausführung die Energieversorgung für die Sensoranordnung 15 vollständig über die beiden zum Elektromotor 14 führenden Verbindungsleitungen 16, 17 erfolgt. Die Gleichrichterdioden 23, 24 stellen am ersten Stromversorgungsanschluß 25 negatives und die Gleichrichterdioden 30, 31 am zweiten Stromversorgungsanschluß 26 positives Potential zur Verfügung. Die Energieversorgung ist stets während des Betriebs des Elektromotors 14 sichergestellt. Um auch bei einem gegebenenfalls vorgesehenen Kurzschließen des Elektromotors 14 eine genügende Energiereserve bereithalten zu können, ist der Kondensator 27 zur Energiespeicherung stets dann erforderlich, wenn auch während des Abbremsvorgangs des Elektromotors 14 die Sensoranordnung 15 Signale an die Auswerteanordnung 13 übertragen soll.

In einer Ausgestaltung der in Figur 2 gezeigten Ausführung des erfindungsgemäßen elektromotorischen Antriebs ist vorgesehen, daß die Sensoranordnung 15 die Spannung an der dritten Leitung 18 einprägt. Diese Ausgestaltung ist dadurch möglich, daß auf der dritten Leitung 18 nur noch die Signalübertragung vom zweiten Teil 11 zum ersten Teil 10 stattfindet. Ein weiterer Vorteil der Ausführung ergibt sich durch die wahlfreie Festlegung der auf der dritten Leitung 18 übertragenen Signalpegel, gleichgültig ob Strom oder Spannung, die eine einfache und sichere Auswertung ermöglicht.

Bei der in Figur 3 gezeigten Sensoranordnung 15 ist als Sensor 28 beispielhaft ein Magnetfeldsensor zugrundegelegt. Der Sensor 28 mit den beiden magnetfeldempfindlichen Elementen 33, 34, vorzugsweise Hallelemente, geben Signale an die signalverarbeitende Anordnung 29 in Abhängigkeit von der Stellung des Permanentmagneten 32 ab. Der Sensor 28 ermöglicht die Bereitstellung eines Drehzahlsignals, eines Lagesignals und/oder eines Drehrichtungssignals. Die signalverarbeitende Anordnung 29 ermittelt aus dem vom Sensor 28 abgegebenen Signal ein über die dritte Leitung 18 zu übertragendes Signal. Die signalverarbeitende Anordnung 29 gibt mit einem Steuersignal 35, 36 entweder die an der dritten Leitung 18 liegende Spannung oder den über die dritte Leitung 18 fließenden Strom vor. Im gezeigten Ausführungsbeispiel steuert die signalverarbeitende Anordnung 29 zwei Stromquellen 37, 38 an, die vorzugsweise auf unterschiedliche diskrete Stromwerte fest eingestellt sind. Mit der gezeigten Anordnung sind demnach vier unterschiedliche Stromvorgaben möglich. Die Anordnung ist beliebig um weitere Stromquellen erweiterbar, wobei ein Übergang bis hin zum analogen Betrieb möglich ist. Bei der Vorgabe eines über die dritte Leitung 18 fließenden Stroms ist es erforderlich, daß der zur Energieversorgung der signalverarbeitenden Anordnung 29 und gegebenenfalls des Sensors 28 erforderliche Strom einen bekannten Wert aufweist, der in der Auswerteanordnung 13 berücksichtigt werden kann. Vorteilhafterweise ist deshalb in der Sensoranordnung 15 die weitere Stromquelle 39 angeordnet, die den Versorgungsstrom unabhängig von der Spannung festhält.

Eine vorteilhafte Weiterbildung sieht den Einsatz des Spannungsreglers 40 vor. Der Spannungsregler 40 gibt einerseits eine feste Betriebsspannung für die Sensoranordnung 15 vor. Andererseits reduziert er Störspannungseinflüsse. Solche Störungen sind beispielweise negative Impulse, die beim Abschalten des Elektromotors 14 über die Dioden 23, 24 in die Sensoranordnung 15 eingekoppelt werden.

Das in Figur 4 gezeigte Ausführungsbeispiel der Auswerteanordnung 13 enthält eingangsseitig die Stromspiegelschaltung 42, die den über die dritte Leitung 18 fließenden Strom in eine entsprechende Ausgangsspannung am Arbeitswiderstand 45 umsetzt. Der eingangsseitig vorgesehene Widerstand 41 begrenzt den über die dritte Leitung 18 fließenden Strom auf einen von der Betriebsspannung abhängigen Maximalwert und erfüllt somit eine Schutzfunktion. Die Stromspiegelschaltung 42 ist beispielsweise aus dem Fachbuch von U. TIETZE und CH. SCHENK, "Halbleiterschaltungstechnik", 5. Auflage, Springer Verlag, 1980, Seite 54 und Seite 112 näher erläutert, so daß eine detaillierte Schaltungsbeschreibung hier nicht erforderlich ist. Das am Arbeitswiderstand 45 auftretende Signal gelangt über die Tiefpaßanordnung 46 an die Komparatoranordnung 49. Die Tiefpaßanordnung 46, die im einfachsten Fall als Widerstands-Kondensator-Kombination 47, 48 als Tiefpaß erster Ordnung realisiert ist, reduziert gegebenenfalls eingekoppelte hochfrequente Störungen auf ein unschädliches Maß. Anstelle eines Tiefpasses erster Ordnung ist es auch möglich, einen Tiefpaß höherer Ordnung oder eine Bandfilterschaltung vorzusehen. Die Komparatoranordnung 49 ermöglicht die Detektion von vier unterschiedlichen Spannungsbereichen. Die einzelnen Bereiche sind durch die als Spannungsteiler geschalteten Widerstände 52, 53, 54 festgelegt. Anzapfungen des Spannungsteilers sind mit den invertierenden Eingängen der beiden Differenzverstärker 50, 51 verbunden. Die Ausgangssignale der beiden Differenzverstärker 50, 51 sind Eingangsports des Mikroprozessors 55 zugeleitet, der die weitere Signalauswertung und Signalverarbeitung vornimmt. Der Mikroprozessor 55 ermittelt beispielsweise eine Drehzahl, eine Drehlage, eine Drehrichtung oder einen anderen vom Sensor 28 erfaßten Wert oder eine abgeleitete Größe daraus.

Eine besonders vorteilhafte Weiterbildung sieht den Einsatz der Spannungswandlerschaltung 43 vor. Die Spannungswandlerschaltung 43, deren Schaltung beispielsweise in dem bereits zitierten Fachbuch von U. TIETZE und CH. SCHENK bekannt ist, erhöht die am Stromversorgungsanschluß 44 liegende Spannung auf einen höheren Wert. Der Stromversorgungsanschluß 44 liegt im allgemeinen auf demselben Potential wie der Betriebsspannungsanschluß 21 für die Betriebsspannung des Elektromotors 14. Die Spannungswandlerschaltung 43 ermöglicht deshalb auch dann noch eine sichere Energieversorung der Sensoranordung 15, wenn die beiden Schaltmittel 19, 20 den Elektromotor 14 gleichzeitig mit dem ersten Betriebsspannungsanschluß 21 zum Kurzschließen des Motors verbinden.

Eine andere Möglichkeit, die Energieversorung der Sensoranordnung 15 sicherzustellen, wenn die beiden Schaltmittel 19, 20 zum Abbremsen des Elektromotors 14 die beiden Verbindungsleitungen 16, 17 gleichzeitig mit dem Betriebsspannungsanschluß 21 verbinden, besteht darin, die Polarität auf der dritten Verbindungsleitung 18 zu ändern. Über die dritte Leitung 18 wird das negative Potential übertragen, während über wenigstens eine der beiden Verbindungsleitungen 16, 17 das positive Potential bereitgestellt wird. In dem in Figur 1 gezeigten Ausführungsbeispiel muß die Polarität der Dioden 23, 24 geändert werden. Der erste Stromversorgungsanschluß 25 der Sensoranordnung 15 ist mit den Katodenanschlüssen der Dioden 23, 24 zu verbinden. Weiterhin ist in der Auswerteanordnung 13 die Stromspiegelschaltung 42 in ihrer Polarität zu ändern. Anstelle der in Figur 4 gezeigten PNP-Transistoren werden NPN-Transistoren eingesetzt, deren Emitter jeweils an Masse 22 liegen. Der Arbeitswiderstand 45 ist mit dem Stromversorgungsanschluß 44 zu verbinden.

In Figur 5 ist ein weiteres Ausführungsbeispiel der Auswerteanordnung 13 gezeigt. Anstelle der in Figur 4 gezeigten Komparatoranordnung 49 wird das von der Tiefpaßanordnung 46 unmittelbar dem Analog/Digital-Wandler 56 zugeleitet. Der Wandler 46 kann im Mikroprozessor 55 enthalten sein. Der Vorteil dieser Ausgestaltung liegt darin, daß mit dem Wandler 56 ohne Mehraufwand wesentlich mehr als vier unterschiedliche Signalpegel detektiert werden können.

Die weitere, in Figur 5 gezeigte Signalverarbeitung ist sowohl für die in Figur 4 als auch für die in Figur 5 gezeigte Auswerteanordnung 13 verwendbar. Die Ausgestaltung betrifft die Bereitstellung eines Schaltsignals, das weitgehend von Störsignalen befreit ist. Ein derartiges Schaltsignal kann vorzugsweise zur Steuerung des Mikroprozessors 55 verwendet werden. In Figur 5 wird von dem Schaltsignal beispielsweise der Interrupteingang 67 des Mikroprozessors 55 beaufschlagt.

Das am Tiefpaß 46 abgreifbare Signal wird der Differenzieranordnung 57 zugeführt, die Signaländerungen besonders hervorhebt. Derartige Signaländerungen treten insbesondere bei stufenförmig sich ändernden Signalen auf, die über die dritte Leitung 18 übertragen werden. Die Differenzieranordnung 57 erkennt nur solche Übergänge als echte übergänge an, welche die wenigstens eine vorgegebene Schaltschwelle des Schwellwertschalters 61 übersteigen. Das Ausgangspotential für das Eingangssignal des Schwellwertschalters 61 wird von Spannungsteiler mit den Widerständen 59, 60 festgelegt. Durch geeignete Wahl der Schwelle für den Schwellwertschalter 61 werden bereits eine Vielzahl von Störimpulsen ausgeblendet. Nutzsignale sowie Störsignale, welche eine Schwelle des Schwellwertschalters 61 überwinden, gelangen zum Impulsdiskriminator 62.

Der Impulsdiskriminator 62 läßt nur diejenigen Signale passieren, deren Impulslänge ein vorgegebenes Maß übersteigt. Die Zeit ist im wesentlichen durch den Wert des Widerstands 65 und den Wert des Kondensators 64 festgelegt. Der Kondensator 64 wird über den Widerstand 65 aufgeladen. Auftretende Eingangsimpulse bewirken über den Schalttransistor 63 ein Entladen des Kondensators 64. Impulse, die kurz aufeinander folgen, verhindern das Ansteigen des Potentials am Kondensator 64 oberhalb eines Schwellwerts, mit dem das Signal im weiteren Schwellwertschalter 66 verglichen wird. Nur diejenigen Impulse, deren Länge das vorgegebene Maß übersteigen, gelangen als Schaltsignal zum Interrupteingang 67 des Mikroprozessors 55. In Abhängigkeit vom Interruptsignal kann beispielsweise der Analog/Digital-Wandler 56 gesteuert werden.

In einer vorteilhaften Ausgestaltung ist vorgesehen, daß die Signalübertragung über die dritte Leitung 18 mittels einer Impulsfolge vorgenommen wird. Die Übertragung entspricht einer seriellen, unidirektionalen Schnittstelle.

Ein Ausführungsbeispiel für die Ausgestaltung der Impulsfolge ist in Figur 6 gezeigt. Ausgehend vom Ruhepegel 68 ist ein zweiter diskreter Pegel 69 vorgesehen. Die binäre Übertragung ist beispielsweise mit einer in der Sensoranordnung 15 enthaltenen Stromquelle 37, 38 durchführbar. Die Signalübertragung beginnt mit einem Startbit 70, dem ein Trennbit 71 zur sicheren Detektion des Startbits 70 nachgeschaltet ist, das einen unterschiedlichen Pegel im Vergleich zum Startbit 70 aufweist. Anschließend erfolgt eine bekannte Anzahl von Informationsbits 72, die von einem Stoppbit 73 abgeschlossen werden. Danach nimmt die Übertragung wieder den Ruhepegel 68 so lange ein, bis eine erneute Impulsfolge abgesetzt wird.

## Patentansprüche

1. Elektromotorischer Antrieb mit einem ersten Teil (10), das eine Steuer- und Auswerteanordnung (12, 13) enthält, und mit einem vom ersten Teil (10) abgesetzten zweiten Teil (11), das einen Elektromotor (14) und eine Sensoranordnung (15) enthält, mit zwei die Steueranordnung (12) und den Elektromotor (14) verbindenden Leitungen (16, 17), die zur Stromversorgung des Elektromotors (14) vorgesehen sind, dadurch gekennzeichnet, daß die Energieversorgung der Sensoranordnung (15) über wenigstens eine der zum Elektromotor (14) führenden Leitungen (16, 17) sowie über eine die Auswerteanordnung (13) und die Sensoranordnung (15) verbindende dritte Leitung (18) vorgesehen ist und daß die dritte Leitung (18) weiterhin zur Übertragung eines von der Sensoranordnung (15) bereitgestellten Signals zur Auswerteanordnung (13) vorgesehen ist und daß die Sensoranordnung (15) den über die dritte Leitung (18) fließenden Strom in Abhängigkeit von einem Sensorsignal vorgibt.

2. Antrieb nach Anspruch 1, dadurch gekennzeichnet, daß die Sensoranordnung (15) über zwei Gleichrichterdioden (23, 24) mit den beiden zum Elektromotor (14) führenden Leitungen (16, 17) verbunden ist.

3. Antrieb nach Anspruch 1, dadurch gekennzeichnet, daß die Sensoranordnung (15) mindestens eine gesteuerte Stromquelle (37, 38) enthält.

4. Antrieb nach Anspruch 1, dadurch gekennzeichnet, daß die Auswerteanordnung (13) eine Stromspiegelschaltung (42) enthält.

5. Antrieb nach Anspruch 1, dadurch gekennzeichnet, daß die Auswerteanordnung (13) eine Schaltung (43) zur Erhöhung der Spannung gegenüber der Betriebsspannung des Elektromotors (14) enthält.

6. Antrieb nach Anspruch 1, dadurch gekennzeichnet, daß die Auswerteanordnung (13) eine Differenzieranordnung (57) und einen Impulslängendiskriminator (62) enthält.

7. Antrieb nach Anspruch 1, dadurch gekennzeichnet, daß zur zumindest kurzfristigen Speicherung der für die Auswerteanordnung (15) benötigten Energie ein Kondensator (27) vorgesehen ist.

8. Antrieb nach Anspruch 1, dadurch gekennzeichnet, daß die Sensoranordnung (15) wenigstens zwei unterschiedliche diskrete Signalpegel (68, 69) vorgibt.

9. Antrieb nach Anspruch 8, dadurch gekennzeichnet, daß die Signalübertragung mittels einer festgelegten Impulsfolge vorgesehen ist.

10. Antrieb nach Anspruch 1, dadurch gekennzeichnet, daß die Sensoranordnung (15) wenigstens einen Sensor (28) zum Erfassen der Lage eines vom Elektromotor (14) angetriebenen Teils enthält.

11. Antrieb nach Anspruch 10, dadurch gekennzeichnet, daß wenigstens ein Hallsensor als Sensor (28) vorgesehen ist.

12. Antrieb nach Anspruch 1, gekennzeichnet durch die Verwendung bei Verstellantrieben im Kraftfahrzeug.

## Claims

1. Electric motor drive having a first section (10) which contains a control arrangement (12) and an evaluation arrangement (13), and having a second section (11) which is offset with respect to the first section (10) and contains an electric motor (14) and a sensor arrangement (15), and having two lines (16, 17) which connect the control arrangement (12) and the electric motor (14) and are provided for the power supply of the electric motor (14), characterized in that the power supply of the sensor arrangement (15) is provided via at least one of the lines (16, 17) leading to the electric motor (14) as well as via a third line (18) connecting the evaluation arrangement (13) and the sensor arrangement (15), and in that the third line (18) is furthermore provided for the purpose of transmitting to the evaluation arrangement (13) a signal provided by the sensor arrangement (15) and in that the sensor arrangement (15) prescribes the current flowing via the third line (18) as a function of a sensor signal.

2. Drive according to Claim 1, characterized in that the sensor arrangement (15) is connected via two rectifier diodes (23, 24) to the two lines (16, 17) leading to the electric motor (14).

3. Drive according to Claim 1, characterized in that the sensor arrangement (15) contains at least one controlled current source (37, 38).

4. Drive according to Claim 1, characterized in that the evaluation arrangement (13) contains a current balancing circuit (42).

5. Drive according to Claim 1, characterized in that the evaluation arrangement (13) contains a circuit (43) for increasing the voltage with respect to the operating voltage of the electric motor (14).

6. Drive according to Claim 1, characterized in that the evaluation arrangement (13) contains a differentiating arrangement (57) and a pulse length discriminator (62).

7. Drive according to Claim 1, characterized in that a capacitor (27) is provided for at least briefly storing the energy required for the evaluation arrangement (15).

8. Drive according to Claim 1, characterized in that the sensor arrangement (15) prescribes at least two different discrete signal levels (68, 69).

9. Drive according to Claim 8, characterized in that the signal transmission is provided by means of a fixed pulse train.

10. Drive according to Claim 1, characterized in that the sensor arrangement (15) contains at least one sensor (28) for detecting the position of a section driven by the electric motor (14).

11. Drive according to claim 10, characterized in that at least one Hall sensor is provided as a sensor (28).

12. Drive according to Claim 1, defined by use in actuators in a motor vehicle.

## Revendications

1. Entraînement électromoteur, qui comprend une première partie (10) qui contient un système de commande et un système d'exploitation (12, 13), et une deuxième partie (11), distincte de la première partie (10), seconde partie (11) qui contient un moteur électrique (14) et un système de détection (15), deux lignes de liaison (16 et 17) qui relient le système de commande (12) et le moteur électrique (14), et qui sont prévues pour alimenter en courant le moteur électrique (14),
caractérisé en ce que
• l'alimentation en énergie du système de commande (15) est prévue par l'intermédiaire d'au moins
• une des lignes (16, 17) qui va au moteur électrique (14) et par l'intermédiaire d'une troisième ligne (18) qui relie le système d'exploitation (13) et le système de détection (15) et
• la troisième ligne (18) est en outre prévue pour transmettre un signal fourni par le système de détection (15) au système d'exploitation (13) et
• le système de détection (15) définit au préalable l'intensité qui passe par la troisième ligne (18) en fonction d'un signal de détecteur.

2. Entraînement électromoteur selon la revendication 1,
caractérisé en ce que
le système de détection (15) est relié par l'intermédiaire de deux diodes de redressement (23, 24) aux deux lignes (16, 17) qui vont au moteur électrique (14).

3. Entraînement électromoteur selon la revendication 1,
caractérisé en ce que
le système de détection (15) contient au moins une source de courant commandée (37, 38).

4. Entraînement électromoteur selon la revendication 1,
caractérisé en ce que
le système d'exploitation (13) contient un circuit de réflexion de courant (42).

5. Entraînement électromoteur selon la revendication 1,
caractérisé en ce que
le système d'exploitation (13) contient un circuit (43) qui sert à augmenter la tension par rapport à la tension de fonctionnement du moteur électrique (14).

6. Entraînement électromoteur selon la revendication 1,
caractérisé en ce que
le système d'exploitation (13) contient un dispositif de différenciation (57) et un discriminateur de durées d'impulsions (62).

7. Entraînement électromoteur selon la revendication 1,
caractérisé en ce qu'
on prévoit un condensateur (27) pour emmagasiner du moins brièvement l'énergie qui est nécessaire au système d'exploitation (15).

8. Entraînement électromoteur selon la revendication 1,
caractérisé en ce que
le système de détection (15) prédéfinit au moins deux niveaux de signaux (68, 69), discrets, différents.

9. Entraînement électromoteur selon la revendication 8,
caractérisé en ce que
la transmission des signaux est prévue au moyen d'une série d'impulsions déterminées.

10. Entraînement électromoteur selon la revendication 1,
caractérisé en ce que
le système de détection (15) contient au moins un détecteur (28) qui sert à détecter la position d'une pièce entraînée par le moteur électrique (14).

11. Entraînement électromoteur selon la revendication 10,
caractérisé en ce qu'
on prévoit au moins un détecteur Hall comme détecteur (28).

12. Entraînement électromoteur selon la revendication 1,
caractérisé par
l'application du mécanisme aux mécanisme d'entraînement de réglage dans des véhicules à moteur.
